# FASCICULE DE BREVET EUROPEEN

(11) **EP 3 274 610 B1**
(45) Date de publication et mention de la délivrance du brevet: **29.04.2020**
(21) Numéro de dépôt: 16714495.5
(22) Date de dépôt: 22.03.2016
(51) Int. Cl.: F16H 1/22, F02C 7/32, F16H 37/06

(54) **BOÎTE À ENGRENAGES COMPORTANT UN RÉDUCTEUR AMÉLIORÉ**
GETRIEBE MIT VERBESSERTEM UNTERSETZUNGSGETRIEBE
GEARBOX COMPRISING AN IMPROVED REDUCTION GEAR

(30) Priorité: 24.03.2015 FR 1552426
(43) Date de publication de la demande: 31.01.2018
(73) Titulaire: Safran Transmission Systems, 92700 Colombes (FR)
(72) Inventeur: BAUDUIN, Lionel, 77550 Moissy-Cramayel (FR); GUILLEMONT, Maxence, 77550 Moissy-Cramayel (FR); VIEL, Julien, 77550 Moissy-Cramayel (FR)
(74) Mandataire: Brevalex
(86) Numéro de dépôt international: PCT/FR2016/050632
(87) Numéro de publication internationale: WO 2016/151238

(56) Documents cités:
- FR-A1- 2 041 815
- FR-A1- 3 006 733
- US-A- 1 513 945

## Description

### DOMAINE TECHNIQUE

L'invention concerne une boîte à engrenages pour une turbomachine d'aéronef, qui comporte deux arbres d'entrainement internes qui tournent dans la boîte à engrenages à des vitesses de rotation différentes et qui comporte des moyens de transmission à encombrement réduit.

### ÉTAT DE LA TECHNIQUE ANTÉRIEURE

Une boîte à engrenages de turbomachine, par exemple de turbomachine d'aéronef est un système de répartition d'énergie permettant d'entrainer et de supporter plusieurs composants et accessoires de la turbomachine à partir de l'énergie produite par la turbomachine.

Pour cela, la boîte à engrenages comporte un arbre d'entrainement qui est relié au rotor de la turbomachine, et une pluralité d'arbres de sortie qui sont reliés à cet arbre d'entrainement.

Chaque arbre de sortie est associé à un ou plusieurs accessoires de la turbomachine, il doit donc fournir à l'accessoire un couple et une vitesse de rotation adaptés. Ainsi, par exemple, les arbres de sortie tournent à des vitesses de rotation différentes.

D'une manière générale, l'arbre d'entrainement est orienté dans l'axe principal de la boîte à engrenages, tandis que les arbres de sortie sont orientés perpendiculairement à l'arbre principal.

Selon un mode de réalisation, l'accouplement des arbres de sortie avec l'arbre d'entrainement est réalisé par l'intermédiaire d'engrenages à couple conique. Ce mode d'accouplement permet de limiter le nombre de composants de la boîte à engrenages et par conséquent réduire les pertes de rendement. Ce mode d'accouplement permet aussi de réduire l'encombrement et la masse de la boîte à engrenages.

Cependant, dans le cas pour lequel la vitesse de rotation d'un arbre de sortie est fortement réduite par rapport à la vitesse de rotation d'un arbre d'entrainement, l'utilisation d'un seul engrenage à couple conique n'est pas possible car il devrait comporter une roue dentée de grand diamètre, ce qui impliquerait un encombrement de cette roue dentée trop important dans la boîte à engrenages.

C'est pourquoi il a été proposé une boîte à engrenages comportant un arbre d'entrainement secondaire qui est relié à l'arbre d'entrainement principal par un réducteur de vitesse.

Cela permet de limiter les dimensions de l'engrenage à couple conique associé à un arbre de sortie devant tourner à vitesse réduite.

Selon un mode de réalisation connu, la boîte à engrenages comporte un système à train épicycloïdal formant le réducteur de vitesse.

Cependant, un système à train épicycloïdal est constitué d'un grand nombre de composants, ce qui augmente le poids de la boîte à engrenages, et augmente aussi le risque de panne par la défaillance de l'un des composants du système à train épicycloïdal.

Le document FR 2041815 A1 divulgue une boîte à engrenages selon le préambule de la revendication 1.

L'invention a pour but de proposer une boîte à engrenages comportant un réducteur de vitesse de construction simplifiée, ayant un encombrement réduit.

### EXPOSÉ DE L'INVENTION

L'invention propose une boîte à engrenages pour une turbomachine d'aéronef selon l'objet de la revendication 1.

L'utilisation d'un arbre intermédiaire pour réaliser la réduction de vitesse permet de limiter le nombre de composants du réducteur de vitesse. De plus, l'orientation de l'arbre intermédiaire par rapport à l'arbre d'entrainement permet de limiter l'encombrement du réducteur de vitesse dans la boîte à engrenages.

De préférence, chacun du premier ou du deuxième étage d'engrenages comporte un pignon monté sur l'arbre d'entrainement ou l'arbre d'entrainement secondaire et un pignon monté sur l'extrémité associée de l'arbre intermédiaire.

De préférence, l'axe principal de l'arbre d'entrainement secondaire est sensiblement coaxial à l'axe principal de l'arbre d'entrainement et l'arbre intermédiaire est situé entre deux extrémités en vis-à-vis de l'arbre d'entrainement et de l'arbre d'entrainement secondaire.

De préférence, chaque extrémité en vis-à-vis de l'arbre d'entrainement et de l'arbre d'entrainement secondaire porte le pignon du premier ou du deuxième étage d'engrenages qui lui est associé.

De préférence, la boîte à engrenages comporte des moyens de guidage de l'arbre intermédiaire en rotation autour de son axe principal qui sont agencés à chaque extrémité de l'arbre intermédiaire.

De préférence, les pignons des étages d'engrenages, qui sont portés par les extrémités de l'arbre intermédiaire, sont situés entre lesdits moyens de guidage de l'arbre intermédiaire en rotation autour de son axe principal.

De préférence, l'arbre intermédiaire comporte des moyens d'amortissement de vibrations.

De préférence, la boîte à engrenages comporte des moyens d'accouplement de l'arbre intermédiaire avec des moyens de commande manuelle de la boîte à engrenages.

L'invention propose aussi une turbomachine d'aéronef qui comporte une boîte à engrenages telle que définie précédemment.

De préférence, la turbomachine comporte des moyens de raccordement de l'arbre d'entraînement au rotor de la turbomachine.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'une boîte à engrenage comportant un arbre d'entrainement secondaire qui est accouplé à l'arbre d'entrainement par l'intermédiaire d'un mécanisme de réduction selon l'invention ;
- la figure 2 est un détail à plus grande échelle du mécanisme de réduction selon l'invention.

### EXPOSÉ DÉTAILLÉ DE MODES DE RÉALISATION PARTICULIERS

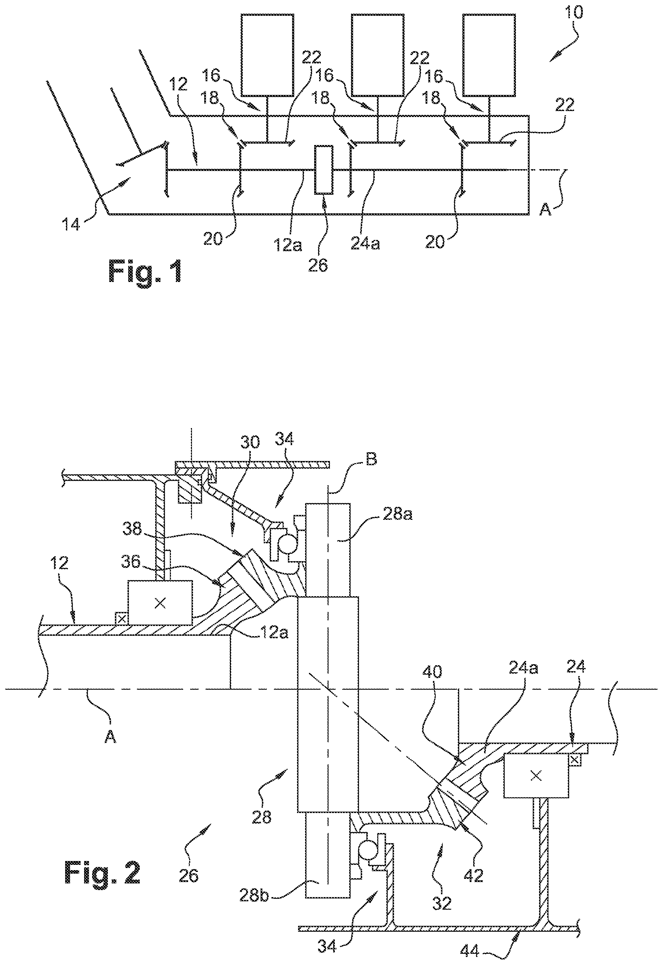

On a représenté à la figure 1 une boîte à engrenages 10 pour une turbomachine, notamment une turbomachine d'aéronef. Cette boîte à engrenages 10 est conçue pour prélever une certaine quantité d'énergie à partir du rotor de la turbomachine, pour redistribuer cette énergie à plusieurs équipements de la turbomachine.

La boîte à engrenages 10 comporte un arbre d'entrainement 12 qui est raccordé au rotor (non représenté) de la turbomachine par un système de renvoi 14, par lequel l'énergie est prélevée, et comporte une pluralité d'arbres de sortie 16 dont chacun est relié à un ou plusieurs équipements de la turbomachine.

L'axe principal A de l'arbre d'entrainement 12 est ici parallèle à l'axe principal de la boîte à engrenages 10. L'axe principal de chaque arbre de sortie 16 est perpendiculaire à l'axe principal de l'arbre d'entrainement 12.

Chaque arbre de sortie 16 est relié à l'arbre d'entrainement 12 par un engrenage à couple conique 18 qui lui est associé. Un engrenage à couple conique 18 est constitué d'un pignon 20 qui est monté sur l'arbre d'entrainement 12 et d'une roue dentée 22 qui est montée sur l'arbre de sortie 16 associé.

Chacun du pignon 20 et de la roue dentée 22 d'un engrenage à couple conique 18 sont en prise l'un avec l'autre et ils comportent des dentures coniques complémentaires.

Le rapport entre le diamètre de la roue dentée 22 et le pignon 20 de l'engrenage à couple conique 18 définit le rapport de réduction de cet engrenage à couple conique 18. Plus ce rapport est élevé, c'est-à-dire plus la roue dentée 22 est de grande dimension ou le pignon 20 est de petite dimension, plus grand sera le rapport de réduction de l'engrenage à couple conique 18.

Cependant, pour pouvoir obtenir un rapport de réduction élevé, le seul rapport dimensionnel entre le pignon 20 et la roue dentée 22 n'est pas suffisant car il impliquerait un trop grand diamètre de la roue dentée 22.

C'est pourquoi la boîte à engrenages 10 comporte un arbre d'entrainement secondaire 24 qui est interposé entre l'arbre d'entrainement 12 et certains arbres de sortie 16. L'arbre d'entrainement secondaire porte ainsi les pignons 20 de certains engrenages à couple conique 18.

L'arbre d'entrainement secondaire 24 est ici coaxial à l'arbre d'entrainement 12 et est situé dans le prolongement de celui-ci. Une extrémité 24a de l'arbre d'entrainement secondaire 24 est située axialement en vis-à-vis et à proximité d'une extrémité 12a de l'arbre d'entrainement 12

L'arbre d'entrainement secondaire 24 est relié à l'arbre d'entrainement 12 par un mécanisme 26 de réduction qui permet à la vitesse de rotation de l'arbre d'entrainement secondaire 24 d'être différente de la vitesse de rotation de l'arbre d'entrainement 12.

La combinaison du rapport de réduction fourni par le mécanisme de réduction 26 avec le rapport de réduction d'un engrenage à couple conique 18 permet d'obtenir un rapport de réduction total suffisamment important sans que la boîte à engrenages 10 ne comprenne de composant ayant des dimensions trop importantes.

Comme on peut le voir plus en détails à la figure 2, le mécanisme de réduction 26 comporte un arbre intermédiaire 28 qui est simultanément accouplé aux extrémités 12a, 24a en vis-à-vis de l'arbre d'entrainement 12 et de l'arbre d'entrainement secondaire 24 par l'intermédiaire de deux étages d'engrenages 30, 32.

L'axe principal B de l'arbre intermédiaire 28 est perpendiculaire à l'axe principal A de l'arbre d'entrainement 12 et de l'arbre d'entrainement secondaire 24.

Dans la description qui va suivre, on considérera que la direction axiale est la direction selon l'axe principal A de l'arbre d'entrainement 12 et que toute direction radiale est une direction perpendiculaire à cet axe principal A de l'arbre d'entrainement 12.

L'arbre intermédiaire 28 est situé axialement entre les extrémités 12a, 24a en vis-à-vis de l'arbre d'entrainement 12 et de l'arbre d'entrainement secondaire 24. Il est monté libre en rotation par rapport à un carter externe de la boîte à engrenages 10 autour de son axe principal B.

La boîte à engrenages 10 comporte deux paliers 34 de guidage en rotation de l'arbre intermédiaire 28 dont chacun reçoit une extrémité associée 28a, 28b de l'arbre intermédiaire.

Une première extrémité 28a de l'arbre intermédiaire 28 est accouplée à ladite extrémité 12a de l'arbre d'entrainement 12 par l'intermédiaire d'un premier étage d'engrenages 30 et la deuxième extrémité 28b de l'arbre intermédiaire 28 est accouplée à ladite extrémité 24a de l'arbre d'entrainement secondaire 24 par l'intermédiaire du deuxième étage d'engrenages 32.

Le premier étage d'engrenages 30 comporte un pignon 36 porté par ladite extrémité 12a de l'arbre d'entrainement 12 et un pignon 38 porté par la première extrémité 28a de l'arbre intermédiaire 28. Le deuxième étage d'engrenages 32 comporte un pignon 40 porté par ladite extrémité 24a de l'arbre d'entrainement secondaire 24 et un pignon 42 porté par la deuxième extrémité 28b de l'arbre intermédiaire 28.

De préférence, chaque étage d'engrenage 30, 32 consiste en un engrenage à couple conique, ou à couple spiro-conique.

De préférence, pour limiter l'encombrement du mécanisme de réduction 26, les pignons 38, 42 portés par les extrémités 28a, 28b de l'arbre intermédiaire 28 sont situés radialement entre les deux paliers 34 de guidage de l'arbre intermédiaire.

La présence de deux étages d'engrenages 30, 32 dans le mécanisme de réduction permet de fournir un rapport de réduction suffisamment important, sans que le mécanisme de réduction 26 ne soit trop volumineux.

De plus, la position radiale des pignons 38, 42 qui sont portés par l'arbre intermédiaire 28, par rapport à l'axe principal A de l'arbre d'entrainement 12 est définie par la dimension des pignons 36, 40 associés, et peut ainsi être relativement faible.

Aussi, grâce à l'orientation de l'arbre intermédiaire 28 perpendiculaire à l'axe principal A de l'arbre d'entrainement 12, l'incorporation de cet arbre intermédiaire 28 dans la boîte à engrenages 10 n'implique pas une augmentation des dimensions de la boîte à engrenages 10 selon l'axe principal A de l'arbre d'entrainement 12.

Selon le mode de réalisation représenté à la figure 2, l'arbre intermédiaire 28 consiste en un élément de révolution métallique. Ce mode de réalisation est relativement simple, peu couteux, et permet d'assurer une bonne rigidité du mécanisme de réduction 26.

Selon une variante de réalisation non représentée, l'arbre intermédiaire 28 est réalisé en un ou plusieurs matériaux et comporte des moyens d'amortissement de vibrations.

Selon un autre aspect du mécanisme de réduction 26, et étant donné que l'axe principal B de l'arbre intermédiaire 28 est perpendiculaire à l'axe principal A de l'arbre d'entrainement 12, au moins une extrémité 28a, 28b de l'arbre intermédiaire 28 est située à proximité de la paroi externe 44 de la boîte à engrenages 10.

De plus, cette extrémité 28a, 28b de l'arbre intermédiaire 28 est orientée sensiblement perpendiculairement à la paroi externe 44 de la boîte à engrenages 10.

Selon un mode de réalisation non représenté de la boîte à engrenages 10, un organe pour la commande manuelle de la boîte à engrenages 10 est apte à être raccordé à une extrémité 28a, 28b de l'arbre intermédiaire 28. Par exemple, l'organe de commande manuelle consiste en une manivelle comportant un arbre de commande qui est apte à traverser une ouverture associée formée dans la paroi 44 de la boîte à engrenages 10.

Selon le mode de réalisation représenté aux figures, l'arbre d'entrainement 12 et l'arbre d'entrainement secondaire 24 sont coaxiaux à l'axe principal A.

Selon une variante de réalisation, l'arbre d'entrainement secondaire 24 est décalé radialement par rapport à l'axe principal A de l'arbre d'entrainement 12. Une telle variante est rendue possible par le fait qu'il est possible d'adapter la position du pignon 42 du deuxième étage d'engrenage le long de l'arbre intermédiaire 28, et par le choix des dimensions et positions respectives des pignons 40, 42 du deuxième engrenage 32.

Selon le mode de réalisation représenté aux figures, l'axe principal de l'arbre d'entrainement secondaire 24 est coaxial à l'axe principal A de l'arbre d'entrainement 12. Il sera compris que l'invention n'est pas limitée à ce mode de réalisation et que l'axe principal de l'arbre d'entrainement secondaire 24 peut être incliné par rapport à l'axe principal A de l'arbre d'entrainement 12.

Un tel décalage angulaire des axes principaux des arbres d'entrainement est permis par la présence de pignons spiro coniques dans le mécanisme de réduction 26. En effet, de tels pignons autorisent toute inclinaison relative des arbres, qui ne sont donc pas obligatoirement perpendiculaires ou orthogonaux l'un par rapport à l'autre.

Il en est par conséquent de même en ce qui concerne l'arbre intermédiaire 28 qui peut donc être incliné par rapport à l'arbre d'entrainement 12 selon un angle différent de 90°.

## Revendications

1. Boîte à engrenages (10) pour une turbomachine d'aéronef qui comporte un arbre d'entrainement (12), un arbre d'entrainement secondaire (24) qui est accouplé à l'arbre d'entrainement (12) par l'intermédiaire d'un mécanisme de réduction (26) et des arbres de sortie (16), dans laquelle le mécanisme de réduction (26) comporte un arbre intermédiaire (28) dont une première extrémité (28a) est accouplée avec l'arbre d'entrainement (12) par un premier étage d'engrenages (30) et dont la deuxième extrémité (28b) est accouplée avec l'arbre d'entrainement secondaire (24) par un deuxième étage d'engrenages (32),
et dans laquelle l'arbre intermédiaire (28) est monté en rotation dans la boîte à engrenages (10) autour de son axe principal (B) incliné par rapport à l'axe principal (A) de l'arbre d'entrainement (12), **caractérisée en ce que** certains desdits arbres de sortie (16) sont accouplés avec l'arbre d'entrainement (12) et les autres desdits arbres de sortie (16) sont accouplés avec l'arbre d'entrainement secondaire (24), chacun desdits arbres de sortie étant accouplé avec l'arbre d'entrainement ou avec l'arbre d'entrainement secondaire par un ensemble à engrenages à couple conique.

2. Boîte à engrenages (10) selon la revendication précédente, **caractérisée en ce que** chacun du premier (30) ou du deuxième étage d'engrenages (32) comporte un pignon (36, 40) monté sur l'arbre d'entrainement (12) ou l'arbre d'entrainement secondaire (24) et un pignon (38, 42) monté sur l'extrémité (28a, 28b) associée de l'arbre intermédiaire (28).

3. Boîte à engrenages (10) selon l'une quelconque des revendications précédentes, **caractérisée en ce que** l'axe principal de l'arbre d'entrainement secondaire (24) est sensiblement coaxial à l'axe principal (A) de l'arbre d'entrainement (12) et l'arbre intermédiaire (28) est situé entre deux extrémités (12a, 24a) en vis-à-vis de l'arbre d'entrainement (12) et de l'arbre d'entrainement secondaire (24).

4. Boîte à engrenages (10) selon l'une quelconque des revendications 1 ou 2, **caractérisée en ce que** l'axe principal de l'arbre d'entrainement secondaire (24) est incliné par rapport à l'axe principal (A) de l'arbre d'entrainement (12) et l'arbre intermédiaire (28) est situé entre deux extrémités (12a, 24a) en vis-à-vis de l'arbre d'entrainement (12) et de l'arbre d'entrainement secondaire (24).

5. Boîte à engrenages (10) selon la revendication 3 ou 4, en combinaison avec la revendication 2, **caractérisée en ce que** chaque extrémité en vis-à-vis (12a, 24a) de l'arbre d'entrainement (12) et de l'arbre d'entrainement secondaire (24) porte le pignon (36, 40) du premier ou du deuxième étage d'engrenages qui lui est associé.

6. Boîte à engrenages (10) selon l'une quelconque des revendications précédentes, **caractérisée en ce qu'**elle comporte des moyens (34) de guidage de l'arbre intermédiaire (28) en rotation autour de son axe principal (B) qui sont agencés à chaque extrémité (28a, 28b) de l'arbre intermédiaire (28).

7. Boîte à engrenages (10) selon la revendication précédente, en combinaison avec la revendication 2, **caractérisée en ce que** les pignons (38, 42) des étages d'engrenages (30, 32), qui sont portés par les extrémités (28a, 28b) de l'arbre intermédiaire (28), sont situés entre lesdits moyens de guidage (34) de l'arbre intermédiaire (28) en rotation autour de son axe principal (B).

8. Boîte à engrenages (10) selon l'une quelconque des revendications précédentes, **caractérisée en ce que** l'arbre intermédiaire (28) comporte des moyens d'amortissement de vibrations.

9. Boîte à engrenages (10) selon l'une quelconque des revendications précédentes, **caractérisée en ce qu'**elle comporte des moyens d'accouplement de l'arbre intermédiaire (28) avec des moyens de commande manuelle de la boîte à engrenages (10).

10. Boîte à engrenages (10) selon l'une quelconque des revendications précédentes, **caractérisée en ce que** l'axe principal (B) de l'arbre intermédiaire (28) est perpendiculaire à l'axe principal (A) de l'arbre d'entrainement (12).

11. Turbomachine d'aéronef **caractérisée en ce qu'**elle comporte une boîte à engrenages (10) selon l'une quelconque des revendications précédentes.

12. Turbomachine selon la revendication précédente, **caractérisée en ce qu'**elle comporte des moyens de raccordement (14) de l'arbre d'entrainement (12) au rotor de la turbomachine.

## Patentansprüche

1. Getriebe (10) für eine Flugzeugturbomaschine, das eine Antriebswelle (12), eine Nebenantriebswelle (24), die über einen Untersetzungsmechanismus (26) mit der Antriebswelle (12) gekoppelt ist, sowie Ausgangswellen (16) aufweist, in welchem
der Untersetzungsmechanismus (26) eine Zwischenwelle (28) aufweist, deren erstes Ende (28a) mit der Antriebswelle (12) durch eine erste Getriebestufe (30) gekoppelt ist und deren zweites Ende (28b) mit der Nebenantriebswelle (24) durch eine zweite Getriebestufe (32) gekoppelt ist, und in welchem
die Zwischenwelle (28) drehend in dem Getriebe (10) um ihre bezüglich der Hauptachse (A) der Antriebswelle (12) geneigte Hauptachse (B) angebracht ist, **dadurch gekennzeichnet, dass** einige der Ausgangswellen (16) mit der Antriebswelle (12) gekoppelt sind und die anderen der Ausgangswellen (16) mit der Nebenantriebswelle (24) gekoppelt sind, wobei jede der Ausgangswellen mit der Antriebswelle oder mit der Nebenantriebswelle durch einen Kegelradsatz gekoppelt ist.

2. Getriebe (10) nach dem vorhergehenden Anspruch, **dadurch gekennzeichnet, dass** jede der ersten (30) oder der zweiten Getriebestufe (32) ein auf der Antriebswelle (12) oder der Nebenantriebswelle (24) angebrachtes Ritzel (36, 40) sowie ein auf einem mit der Zwischenwelle (28) verbundenen Ende (28a, 28b) angebrachtes Ritzel (38, 42) aufweist.

3. Getriebe (10) nach einem der vorhergehenden Ansprüche, **dadurch gekennzeichnet, dass** die Hauptachse der Nebenantriebswelle (24) im Wesentlichen koaxial zur Hauptachse (A) der Antriebswelle (12) ausgebildet ist und die Zwischenwelle (28) zwischen zwei Enden (12a, 24a) gegenüber der Antriebswelle (12) und der Nebenantriebswelle (24) liegt.

4. Getriebe (10) nach einem der Ansprüche 1 oder 2, **dadurch gekennzeichnet, dass** die Hauptachse der Nebenantriebswelle (24) bezüglich der Hauptachse (A) der Antriebswelle (12) geneigt ist und die Zwischenwelle (28) zwischen zwei Enden (12a, 24a) gegenüber der Antriebswelle (12) und der Nebenantriebswelle (24) liegt.

5. Getriebe (10) nach Anspruch 3 oder 4 in Verbindung mit Anspruch 2, **dadurch gekennzeichnet, dass** jedes Ende (12a, 24a) gegenüber der Antriebswelle (12) und der Nebenantriebswelle (24) das Ritzel (36, 40) der diesem zugeordneten ersten oder der zweiten Getriebestufe trägt.

6. Getriebe (10) nach einem der vorhergehenden Ansprüche, **dadurch gekennzeichnet, dass** es Führungsmittel (34) der Zwischenwelle (28) in Rotation um ihre Hauptachse (B) aufweist, welche an jedem Ende (28a, 28b) der Zwischenwelle (28) angeordnet sind.

7. Getriebe (10) nach dem vorhergehenden Anspruch in Verbindung mit Anspruch 2, **dadurch gekennzeichnet, dass** sich die Ritzel (38, 42) der Getriebestufen (30, 32), die von den Enden (28a, 28b) der Zwischenwelle (28) getragen werden, zwischen den Führungsmitteln (34) der Zwischenwelle (28) in Rotation um ihre Hauptachse (B) befinden.

8. Getriebe (10) nach einem der vorhergehenden Ansprüche, **dadurch gekennzeichnet, dass** die Zwischenwelle (28) Schwingungsdämpfer aufweist.

9. Getriebe (10) nach einem der vorhergehenden Ansprüche, **dadurch gekennzeichnet, dass** es Kopplungsmittel der Zwischenwelle (28) mit manuellen Steuerungsmitteln des Getriebes (10) aufweist.

10. Getriebe (10) nach einem der vorhergehenden Ansprüche, **dadurch gekennzeichnet, dass** die Hauptachse (B) der Zwischenwelle (28) senkrecht zur Hauptachse (A) der Antriebswelle (12) steht.

11. Flugzeugturbomaschine, **dadurch gekennzeichnet, dass** sie ein Getriebe (10) nach einem der vorhergehenden Ansprüche aufweist.

12. Turbomaschine nach dem vorhergehenden Anspruch, **dadurch gekennzeichnet, dass** sie Verbindungsmittel (14) der Antriebswelle (12) mit dem Rotor der Turbomaschine aufweist.

## Claims

1. Gearbox (10) for an aircraft turbine engine that comprises a drive shaft (12), a secondary drive shaft (24) that is coupled to the drive shaft (12) by means of a reduction mechanism (26), and output shafts (16)
wherein the reduction mechanism (26) comprises an intermediate shaft (28), a first end (28a) of which is coupled to the drive shaft (12) by means of a first stage of gears (30) and the second end (28b) of which is coupled to the secondary drive shaft (24) by means of a second stage of gears (32),
and wherein the intermediate shaft (28) is mounted in the gearbox (10) so as to rotate about the main axis (B) thereof inclined with respect to the main axis (A) of the drive shaft (12)
**characterised in that** some of said output shafts (16) are coupled with the drive shaft and the other output shafts (16) are coupled with the secondary drive shaft (24), each of said output shafts (16) being coupled to the drive shaft (12) or to the secondary drive shaft (24) by means of a set of ring and pinion gears (18),

2. Gearbox (10) according to the preceding claim, **characterised in that** each of the first (30) or second stage of gears (32) comprises a pinion (36, 40) mounted on the drive shaft (12) or the secondary drive shaft (24) and a pinion (38, 42) mounted on the associated end (28a, 28b) of the intermediate shaft (28).

3. Gearbox (10) according to any one of the preceding claims, **characterised in that** the main axis of the secondary drive shaft (24) is substantially coaxial with the main axis (A) of the drive shaft (12), and the intermediate shaft (28) is situated between two facing ends (12a, 24a) of the drive shaft (12) and of the secondary drive shaft (24).

4. Gearbox (10) according to any of claims 1 or 2, **characterised in that** the main axis of the secondary drive shaft (24) is inclined with respect to the main axis of the drive shaft (12) and the intermediate shaft (28) is situated between two facing ends (12a, 24a) of the drive shaft (12) and of the secondary drive shaft (24).

5. Gearbox (10) according to claim 3 or claim 4, in combination with claim 2, **characterised in that** each facing end (12a, 24a) of the drive shaft (12) and of the secondary drive shaft (24) carries the pinion (36, 40) of the first or second stage of gears that is associated therewith.

6. Gearbox (10) according to any of the preceding claims, **characterised in that** it comprises means (34) for guiding the intermediate shaft (28) rotatably about its main axis (B), which are arranged at each end (28a, 28b) of the intermediate shaft (28).

7. Gearbox (10) according to the preceding claim, in combination with claim 2, **characterised in that** the pinions (38, 42) of the stages of gears (30, 32), which are carried by the ends (28a, 28b) of the intermediate shaft (28), are situated between said means (34) for guiding the intermediate shaft (28) in rotation about its main axis (B).

8. Gearbox (10) according to any of the preceding claims, **characterised in that** the intermediate shaft (28) comprises vibration damping means.

9. Gearbox (10) according to any of the preceding claims, **characterised in that** it comprises means for coupling the intermediate shaft (28) with means for manual control of the gearbox (10).

10. Gearbox (10) according to any of the preceding claims, **characterised in that** the main axis (B) of the intermediate shaft (28) is perpendicular to the main axis (A) of the drive shaft (12).

11. Aircraft turbine engine, **characterised in that** it comprises a gearbox (10) according to the preceding claims.

12. Turbine engine according to the preceding claim, **characterised in that** it comprises means (14) for connecting the drive shaft (12) to the rotor of the turbine engine.
